# EUROPÄISCHE PATENTSCHRIFT

(11) **EP 4 401 999 B1**
(45) Veröffentlichungstag und Bekanntmachung des Hinweises auf die Patenterteilung: **14.05.2025**
(21) Anmeldenummer: 22761100.1
(22) Anmeldetag: 02.08.2022
(51) Int. Cl.: B60K 11/02, B60K 1/00, F16L 21/02

(54) **DICHTUNGSANORDNUNG IM KÜHLKREIS EINES E-ACHSEN-MODULS**
SEALING ARRANGEMENT IN A COOLING CIRCUIT OF AN ELECTRIC DRIVE AXLE MODULE
ARRANGEMENT DES JOINTS DANS UN CIRCUIT DE REFROIDISSEMENT D'UN MODULE D'ENTRAÎNEMENT ÉLECTRIQUE D'UN ESSIEU

(30) Priorität: 17.09.2021 DE 102021210319
(43) Veröffentlichungstag der Anmeldung: 24.07.2024
(73) Patentinhaber: Robert Bosch GmbH, 70442 Stuttgart (DE)
(72) Erfinder: BOETTINGER, Theresa Sophia, 70180 Stuttgart (DE); SCHWARTZ, Daniel, 71701 Schwieberdingen (DE); BREINLINGER, Philipp, 76137 Karlsruhe (DE); FEIGL, Markus, 71706 Markgroeningen (DE)
(86) Internationale Anmeldenummer: PCT/EP2022/071648
(87) Internationale Veröffentlichungsnummer: WO 2023/041240

(56) Entgegenhaltungen:
- EP-A1- 3 663 689
- WO-A1-2007/040408
- WO-A1-2020/189826
- DE-A1- 102019 124 280
- FR-A1- 2 790 303
- US-A1- 2014 217 727

## Beschreibung

### Technisches Gebiet

Die Erfindung bezieht sich auf ein E-Achsen-Modul, umfassend mindestens eine elektrische Maschine und mindestens eine Leistungselektronik. Des Weiteren vorgesehen ist eine Dichtungsanordnung einem Kühlkreis des E-Achsen-Moduls.

### Stand der Technik

DE 10 2012 019 106 A1 bezieht sich auf ein Steckstück. Dieses wird zum dichtenden Verbinden zweier einander zugeordneter Zylinderflächen eingesetzt, welches einen im Wesentlichen rohrförmigen Stützkörper umfasst. Dieser weist an seinen Enden ringförmig umlaufende Dichtelemente auf. Diese sind zur Herstellung einer dichten Verbindung mit jeweils einer der abzudichtenden Zylinderflächen in Eingriff bringbar, wobei wenigstens eines der Dichtelemente als auf der Außenfläche des Stützkörpers ringförmig umlaufende Dichtwulst mit einer kugelförmig gewölbten Dichtfläche ausgebildet ist. Es ist vorgesehen, dass der Kugelradius der Dichtfläche so gewählt ist, dass der Kugelmittelpunkt in etwa auf der Symmetrieachse des Stützkörpers liegt. Damit ist ein über die Dichtfläche weitgehend konstanter Anpressdruck unabhängig von der Winkelstellung des Steckstücks im Einbauraum gewährleistet.

DE 10 2014 225 925 A1 hat eine Dichtungsanordnung und ein Verfahren zur Montage einer Dichtungsanordnung zum Gegenstand. Am äußeren Umfang eines im Wesentlichen ringförmig ausgebildeten Dichtteils befinden sich zwei radial über den Umfang hervorstehende Wülste. Ein Anpressung wird dadurch erreicht, dass sich an beiden Stirnseiten des im Wesentlichen ringförmig ausgebildeten Dichtkörpers federnde Elemente befinden, welche die am Außenumfang angespritzten Wülste im montierten Zustand der Dichtbuchse gegen eine Gehäuseinnenfläche anstellen, so dass die Wülste dichtend an der Innenseite anliegen.

DE 10 2004 058 302 A1 hat eine Dichtbuchse zum Gegenstand, insbesondere für ein hydraulisches Gerät. Die Dichtbuchse ist aus einem Kunststoffmaterial hergestellt und hat an einer Stirnfläche eine vorzugsweise kegelförmige Erhöhung, die dichtend an einer Anlageschulter oder dergleichen anlegbar ist. An einer rückseitigen Stirnfläche ist eine kegelstumpfförmige Erhöhung ausgeführt, in welche eine Dichtbuchsenbohrung mündet. Die Erhöhung läuft im Abstand zum Außenumfang der Dichtbuchse in einer Stirnfläche aus.

DE 10 2011 076 312 A1 bezieht sich auf eine Kühlvorrichtung für ein Gehäuse. In dem Gehäuse ist mindestens ein Baustein einer Leistungselektronik aufgenommen. Eine Kühlstruktur stellt eine Kühlfläche zum Gehäuse dar. Die zu umspritzende Kühlstruktur ist bei der Fertigung des Gehäuses durch ein die zu umspritzende Kühlstruktur beaufschlagendes Medium abgestützt.

Weitere E-Achsen-Module bzw. Dichtungsanordnungen sind bekannt aus der EP 3 663 689 A1, der US 2014/217 727 A1, der FR 2 790 303 A1, der WO 2007/040 408 A1, der DE 10 2019 124 280 A1 und der WO 2020/189 826 A1.

### Darstellung der Erfindung

Erfindungsgemäß wird ein E-Achsen-Modul, umfassend mindestens eine elektrische Maschine und mindestens eine Leistungselektronik und einen Kühlkreis mit einer Dichtungsanordnung darin vorgeschlagen, wobei die Dichtungsanordnung einen rohrförmigen Einsatz umfasst, an dem ein erstes Dichtelement angeordnet ist, wobei ein weiteres Dichtelement einer der Stirnseiten des rohrförmigen Einsatzes zugeordnet ist, wobei zwischen den Dichtelementen eine Überlauföffnung vorgesehen ist, wobei der rohrförmige Einsatz in einer Vertiefung eines Gehäuses der elektrischen Maschine aufgenommen ist und die Überlauföffnung in einer Wandung der Vertiefung des Gehäuses ausgeführt ist.

Durch diese Lösung lässt sich aufgrund der Anordnung der Überlaufbohrung in einer Wandung eines Gehäuses ein Hohlraum einer Leistungselektronik gegen durch den Kühlkreis nachlaufendes Kühlmedium wirkungsvoll und zuverlässig abdichten, so dass die Funktionsfähigkeit der Leistungselektronik jederzeit gewährleistet bleibt.

Die Überlauföffnung in einer Wandung des Gehäuses ist insbesondere derart dimensioniert, dass der über den rohrförmigen Einsatz stetig nachlaufende Strom des Kühlmediums abgeleitet werden kann und die Dichtheit des Hohlraums der Leistungselektronik mit den darin aufgenommenen elektronischen Halbleiterbauelementen stets gewährleistet bleibt.

In einer weiteren vorteilhaften Ausgestaltung der erfindungsgemäß vorgeschlagenen Dichtanordnung ist der rohrförmige Einsatz in einer Konizität ausgeführt, die zu einer Konizität einer Vertiefung im Gehäuse korrespondiert. Durch die Konizität des rohrförmigen Einsatzes sowie der Vertiefung ist eine Beschädigung eines Dichtelements am Umfang des rohrförmigen Einsatzes beim Einfügen in vertikaler Richtung in die Vertiefung ausgeschlossen, was die Fertigung erheblich vereinfacht.

Die erfindungsgemäß vorgeschlagene Dichtungsanordnung umfasst das erste Dichtelement, welches als O-Ring ausgeführt sein kann und auf einer Mantelfläche des rohrförmigen Einsatzes sitzt. Dazu kann dieser mit mindestens einer sich in Umfangsrichtung des rohrförmigen Einsatzes erstreckenden umlaufenden Nut versehen sein. Daneben besteht die Möglichkeit, das erste Dichtelement als V-förmige Dichtscheibe auszuführen und an einer der Stirnseiten des rohrförmigen Einsatzes anzuordnen. Die V-Form der Dichtscheibe bewirkt bei ansteigendem Druck des Kühlmediums ein Aufweiten der Dichtung und ein festes Anpressen der Dichtungsteile der V-förmigen Dichtteile an gegenüberliegende Wandungen des Gehäuses beziehungsweise des rohrförmigen Dichtelements, so dass der Hohlraum der Leistungselektronik jederzeit dicht bleibt.

In weiterer vorteilhafter Ausgestaltung der erfindungsgemäß vorgeschlagenen Dichtungsanordnung kann das weitere Dichtelement ebenfalls als O-Ring ausgeführt werden und auf einer Mantelfläche des rohrförmigen Einsatzes angeordnet sein. Daneben besteht die Möglichkeit, weitere Dichtelemente als V-förmige Dichtscheibe oder als X-Ring auszuführen und einer der Stirnseiten des rohrförmigen Einsatzes zuzuordnen. Auch bei der Ausgestaltungsmöglichkeit des weiteren Dichtelements kann durch die Geometrie des weiteren Dichtelements, insbesondere ausgeführt als V-förmige Dichtscheibe beziehungsweise als X-Ring, eine Aufweitung des Dichtelements und damit eine bessere Anlage der dichtenden Teile des weiteren Dichtelements an gegenüberliegende Wandungen erzielt werden.

In weiterer vorteilhafter Ausgestaltung der erfindungsgemäß vorgeschlagenen Dichtungsanordnung können das erste Dichtelement und das weitere Dichtelement jeweils als O-Ring ausgeführt werden, die in Bezug auf den rohrförmigen Einsatz in einem vertikalen Abstand zueinander angeordnet sind.

Durch die erfindungsgemäß vorgeschlagene Dichtungsanordnung kann über das erste Dichtelement der Hohlraum der Leistungselektronik gegen das durch das Gehäuse beziehungsweise den rohrförmigen Einsatz nachströmende Kühlmedium wirkungsvoll abgedichtet werden.

### Vorteile der Erfindung

Durch die erfindungsgemäß vorgeschlagene Lösung lässt sich eine kompakte Dichtanordnung schaffen, die eine Mehrfach-Abdichtung erlaubt. Die erfindungsgemäß vorgeschlagene Dichtungsanordnung umfasst neben dem rohrförmigen Einsatz besagte Dichtelemente, nämlich zumindest ein erstes Dichtelement sowie ein weiteres Dichtelement. Diese können in verschiedenen Ausführungsvarianten ausgeführt werden, befinden sich jedoch gemäß sämtlichen Ausführungsvarianten in einem vertikalen Abstand zueinander in Bezug auf die Axialerstreckung des rohrförmigen Einsatzes.

Insbesondere ist bei der erfindungsgemäß vorgeschlagenen Lösung im montierten Zustand des rohrförmigen Einsatzes in einer Vertiefung an einem Gehäuse sichergestellt, dass über eine zwischen dem ersten Dichtelement und dem weiteren Dichtelement liegende Überlauföffnung im Gehäuse ein Abführen nachströmenden Kühlmediums gewährleistet ist. Dabei ist die Überlauföffnung in der Wandung des Gehäuses beziehungsweise in der Wandung der Vertiefung im Gehäuse, beispielsweise der elektrischen Maschine, so dimensioniert, dass sichergestellt ist, dass der über den rohrförmigen Einsatz nachströmende Kühlfluidstrom sicher abgeführt werden kann.

Wird beispielsweise eines der Dichtelemente als V-förmige Dichtscheibe ausgeführt, so kann durch die Geometrie des Dichtelements auch ein erhöhtes Druckniveau abgefangen werden. Bei einer V-förmig ausgestalteten Dichtungsgeometrie oder auch bei einem als X-Ring beschaffenen Dichtelement wird aufgrund des Druckanstiegs, beispielsweise über konstant nachströmendes Kühlmedium erreicht, dass die V-förmig ausgebildete Dichtungsgeometrie jeweils mit erhöhtem Anpressdruck an Anlageflächen, ob an die Wand der Vertiefung oder die Mantelfläche des rohrförmigen Einsatzes, gepresst wird und somit eine erhöhte Dichtwirkung erreicht wird, durch welche ein unerwünschtes Eindringen von Kühlmedium in den Hohlraum der Leistungselektronik sicher ausgeschlossen werden kann. Dies gilt sowohl für das erste Dichtelement wie auch für das weitere Dichtelement, unbeschadet dessen, ob die Dichtelemente jeweils an der Mantelfläche des rohrförmigen Einsatzes oder an einer der Stirnseiten des rohrförmigen Einsatzes aufgenommen beziehungsweise diesen zugeordnet sind.

Wird beispielsweise sowohl der rohrförmige Einsatz wie auch die Vertiefung in einer Konizität ausgeführt, so kann bei der Montage von beispielsweise zwei O-Ring-förmig ausgebildeten Dichtelementen sichergestellt werden, dass bei der Fertigung eine Beschädigung der als O-Ring ausgeführten Dichtelemente aufgrund vorhandener Grate im Bereich der Überlauföffnung ausgeschlossen werden kann.

Durch die erfindungsgemäß vorgeschlagene Lösung ist der Kühlkreislauf zwischen der Leistungselektronik (Inverter) und der elektrischen Maschine eines E-Achsen-Moduls kostengünstig abgedichtet. Ferner wird durch den Einsatz der erfindungsgemäß vorgeschlagenen Lösung eine einfache Montage gewährleistet. Des Weiteren ist durch die erfindungsgemäß vorgeschlagene Dichtungsanordnung mit einer Zweifach-Abdichtung gewährleistet, dass unter keinen Umständen Kühlfluid in den Hohlraum der Leistungselektronik, in der die Halbleiter-Bauelemente angeordnet sind, gelangen kann. Die erfindungsgemäß vorgeschlagene Lösung zeichnet sich insgesamt durch den Einsatz weniger Bauteile aus, ferner ist der Fertigungsaufwand erheblich herabgesetzt. Auch der Montageaufwand ist geringer sowie die Montagesicherheit erhöht, da eine Beschädigung des ersten Dichtelements oder des weiteren Dichtelements aufgrund beispielsweise der Konizität von rohrförmigem Einsatz und korrespondierender Vertiefung gewahrt ist. Des Weiteren ist durch die Integration des rohrförmigen Einsatzes in eine Vertiefung in einem der Gehäuse der Platzbedarf geringer, da die Dichtungsanordnung gewissermaßen vom Gehäuse, beispielsweise der elektrischen Maschine, umschlossen ist.

Durch die erfindungsgemäß vorgeschlagene Dichtungsanordnung, welche eine Zweifach-Abdichtungsmöglichkeit bietet, sind Kühlkreislauf und Leistungselektronik gegen die Umwelt abgedichtet. Die beiden Dichtungen sind räumlich voneinander getrennt, so dass bei Versagen einer Dichtung die Überlauföffnung stetig nachströmendes Kühlfluid abführt und somit sicherstellt, dass nachströmendes Kühlfluid nicht in den Hohlraum der Leistungselektronik eindringt. Des Weiteren hat die räumliche Trennung des ersten und des weiteren Dichtelements den Vorteil, dass im Service oder bei Ausfall eine Dichtheitsprüfung leichter durchzuführen ist, ferner lässt sich eine eventuell vorhandene Leckage schneller orten.

### Kurze Beschreibung der Zeichnungen

Ausführungsformen der Erfindung werden anhand der Zeichnungen und der nachfolgenden Beschreibung näher erläutert.

Es zeigen:
- Figuren 1 bis 3: eine Dichtungsanordnung zwischen einer elektrischen Maschine einerseits und einem Gehäuse einer Leistungselektronik andererseits unter Einsatz einer gehäuseextern verlaufenden Kunststoffleitung unter Verwendung einer Dichtbuchse,
- Figur 4: eine erste Ausführungsvariante der erfindungsgemäß vorgeschlagenen Dichtungsanordnung,
- Figur 5: eine weitere Ausführungsvariante der erfindungsgemäß vorgeschlagenen Dichtungsanordnung unter Verwendung eines eine Konizität aufweisenden rohrförmigen Einsatzes,
- Figur 6: eine weitere Ausführungsvariante der erfindungsgemäß vorgeschlagenen Dichtungsanordnung mit einem weiteren Dichtelement, das als V-förmige Dichtscheibe ausgeführt ist,
- Figur 7: eine weitere Ausführungsvariante der erfindungsgemäß vorgeschlagenen Dichtungsanordnung mit einem als V-förmige Dichtscheibe ausgebildeten Dichtelement,

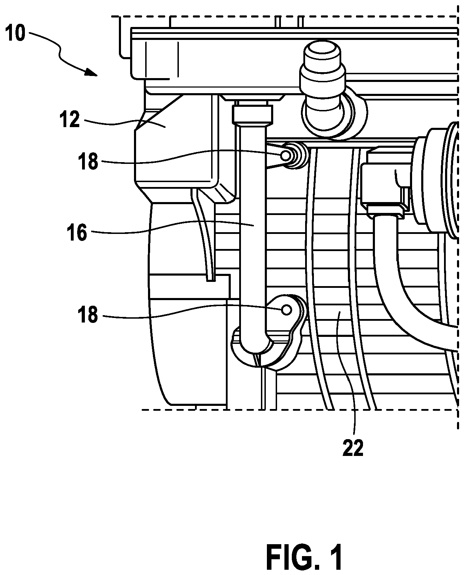

Figur 1 zeigt ein E-Achsen-Modul 10, in dessen Gehäuse 12 eine elektrische Maschine 14 untergebracht ist. Auf der Außenseite des Gehäuses 12 verläuft eine Kunststoffleitung 16, die an einer Gehäusewand 22 angeschlossen ist und am Gehäuse 12 über mehrere Befestigungsflansche 18 befestigt ist.

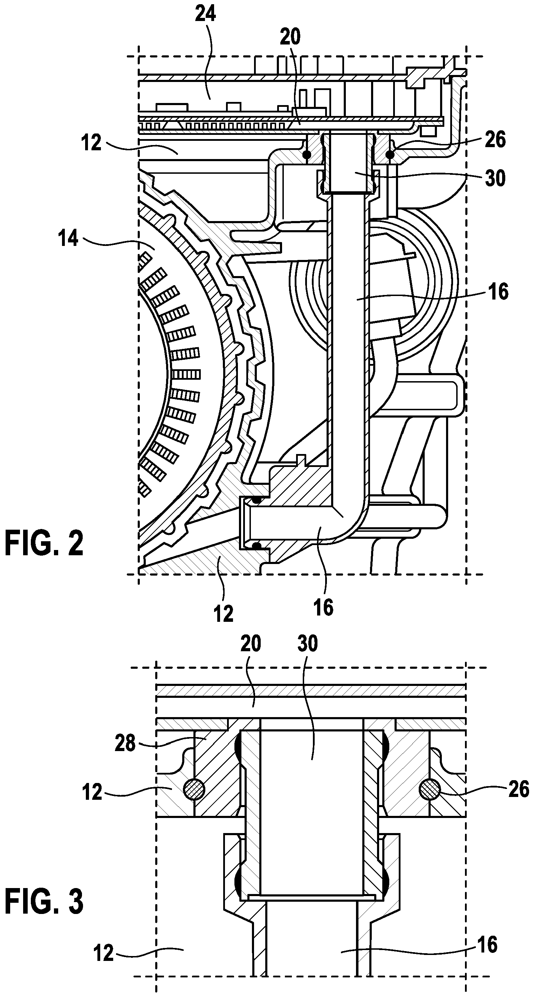

Figur 2 zeigt das Gehäuse 12 der elektrischen Maschine 14 in einer Seitenansicht. Das Gehäuse 12 nimmt die elektrische Maschine 14 auf; eine Kühlleitung erstreckt sich von dieser zu der Kunststoffleitung 16, in welche eine Dichtbuchse 30 eingelassen ist. Die Dichtbuchse 30 ist gemäß der Darstellung in Figur 2 von einem Stutzen 28 umschlossen, der mittels einer Dichtung 26 am Gehäuse 12 abgedichtet ist.

Figur 3 zeigt in vergrößerter Darstellung die Dichtbuchse 30, die mit einem Ende im Stutzen 28 und mit ihrem anderen Ende in der Kunststoffleistung 16 abgedichtet ist. Der Stutzen 28 seinerseits ist mittels einer als O-Ring ausgeführten Dichtung 26 in das Gehäuse 12 abgedichtet. Über die Dichtbuchse 30 wird ein Hohlraum 42 einer Leistungselektronik 24 gegen das die Kunststoffleitung 16 durchströmende Kühlmedium abgedichtet.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

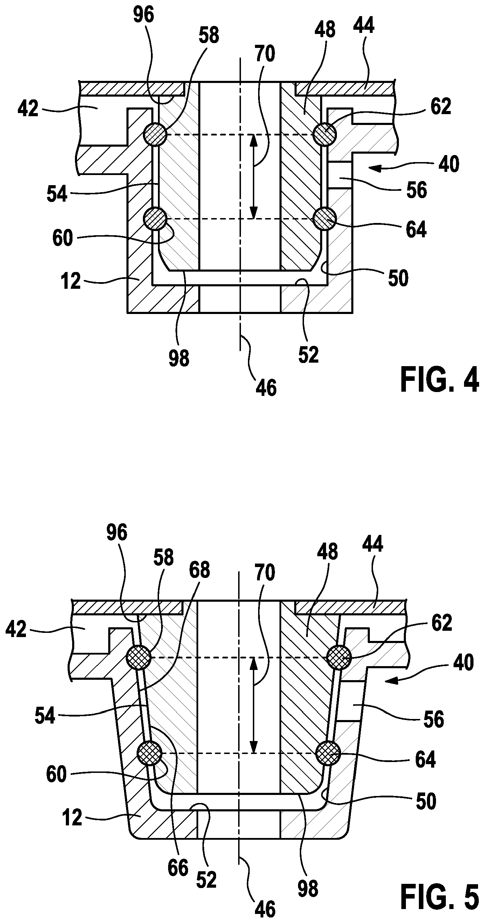

Figur 4 zeigt eine erste Ausführungsvariante einer erfindungsgemäß vorgeschlagenen Dichtungsanordnung 40 Über die Dichtungsanordnung 40 ist ein Hohlraum 42 der Leistungselektronik 24 des E-Achsen-Moduls 10 gegen ein im Kühlkreislauf eines E-Achsen-Moduls 10 zirkulierendes Kühlmedium abgedichtet. Aus der Darstellung gemäß Figur 4 geht hervor, dass der Hohlraum 42 der Leistungselektronik 24 über ein hier nur schematisch dargestelltes Gehäuseblech 44 begrenzt ist. Die Dichtungsanordnung 40 umfasst im Wesentlichen einen rohrförmigen Einsatz 48, der in eine Vertiefung 52 einer Gehäusewand 22 des Gehäuses 12 des E-Achsen-Moduls 10 oder der elektrischen Maschine 14 eingelassen ist. Aus der Darstellung gemäß Figur 4 geht hervor, dass der rohrförmige Einsatz 48 symmetrisch zu einer Symmetrieachse 46 ausgeführt ist. Gemäß Figur 4 umfasst das Gehäuse 12 eine von seiner Innenmantelfläche 50 ausgehende Überlauföffnung 56, die beispielsweise als Bohrung ausgestaltet sein kann. An einer Mantelfläche 54 des rohrförmigen Einsatzes 48 befinden sich ein erstes Dichtelement 62 sowie ein weiteres Dichtelement 64. Diese sind bezüglich der Symmetrieachse 46 des rohrförmigen Einsatzes 48 in einem vertikalen Abstand 70 zueinander angeordnet. Die beispielsweise als O-Ring ausgebildeten Dichtelemente 62, 64 können in an der Mantelfläche 54 des rohrförmigen Einsatzes 48 ausgebildete Ausnehmungen 58, 60 eingelassen und axial fixiert sein. Aus der Darstellung gemäß Figur 4 geht hervor, dass sich die Überlauföffnung 56 etwa mittig zwischen den beiden Dichtelementen 62, 64 befindet.

Versagt das weitere Dichtelement 64 und wird undicht, so strömt aus dem Gehäuse 12 nachströmendes Kühlfluid über die Überlauföffnung 56, so dass sichergestellt ist, dass durch das erste Dichtelement 62 der Hohlraum 42 der Leistungselektronik 24 gegen das nachströmende Kühlmedium abgedichtet bleibt. Demzufolge bleibt der Hohlraum 42 der Leistungselektronik 24 samt den in diesem angeordneten Halbleiterbauelementen trocken, so dass die Funktionstüchtigkeit eines elektrisch angetriebenen Fahrzeugs erhalten bleibt.

Während gemäß der Dichtungsanordnung 40, wie sie in Figur 4 dargestellt ist, der Hohlraum 42 der Leistungselektronik 24 bei Versagen des weiteren Dichtelements 64 abgedichtet bleibt, ist der Kühlkreislauf über das weitere Dichtelement 64 gegen die Umwelt abgedichtet. Die in Figur 4 dargestellte Überlauföffnung 56 ist so ausgelegt, dass über diese ausreichend Kühlmedium abgeführt werden kann. Anstelle der in der Schnittdarstellung gemäß Figur 4 dargestellten Überlauföffnung 56 können auch mehrere Überlauföffnungen 56 in der Wandung der Vertiefung 52 des Gehäuses 12 ausgebildet sein.

Figur 5 zeigt eine weitere Ausführungsvariante der in Figur 4 dargestellten Ausführungsvariante der erfindungsgemäßen Dichtungsanordnung 40. Im Unterschied zur Darstellung gemäß Figur 4 sind in der in Figur 5 dargestellten Ausführungsvariante sowohl der rohrförmige Einsatz 48 als auch die Vertiefung 52 bezüglich ihrer Innenmantelfläche 50 in Konizitäten 66 beziehungsweise 68 gefertigt. In der Darstellung gemäß Figur 5 werden als Dichtelemente 62, 64 jeweils O-Ringe 86 eingesetzt. Durch die Konizität 66 der Mantelfläche 54 des rohrförmigen Einsatzes 48 sowie durch die Konizität 68 der Vertiefung 52 ist sichergestellt, dass bei Montage des weiteren Dichtelements 64 in Gestalt eines O-Rings 86 eine Beschädigung durch beispielsweise verbliebene Grate an der Innenmantelfläche 50 der Vertiefung 52 im Bereich der Überlauföffnung 56 das weitere Dichtelement 64 nicht beschädigen. Auch bei der Ausführungsvariante gemäß Figur 5 ist die mindestens eine Überlauföffnung 56 so dimensioniert, dass ausreichend Kühlfluid abgeleitet werden kann, wobei die Dichtheit des Hohlraums 42 der Leistungselektronik 24 durch Anlage des als O-Ring 86 ausgebildeten ersten Dichtelements 62 in seiner ersten Ausnehmung 58 einerseits und an der Innenmantelfläche 50 der Vertiefung 52 andererseits gewährleistet bleibt. Eine erste Stirnseite des rohrförmigen Einsatzes 48 ist durch Bezugszeichen 96 identifiziert, während eine gegenüberliegende zweite Stirnseite des rohrförmigen Einsatzes 48 durch Bezugszeichen 98 bezeichnet ist. Im Bereich der ersten Stirnseite 96 ist der rohrförmige Einsatz 48 vom Gehäuseblech 44 umschlossen. In den Ausführungsvarianten der erfindungsgemäßen Dichtungsanordnung 40 gemäß den Figuren 4 und 5 liegen die beiden Dichtelemente 62, 64 - hier jeweils als O-Ringe 86 ausgeführt - in vertikaler Richtung um einen Abstand 70 auseinander. Innerhalb dieses Abstandes 70 liegt die mindestens eine Überlauföffnung 56 in der Gehäusewand 22 des Gehäuses 12 der elektrischen Maschine 14. Auch in der Ausführungsvariante gemäß Figur 5 ist der rohrförmige Einsatz 48 symmetrisch zu seiner Symmetrieachse 46 gefertigt.

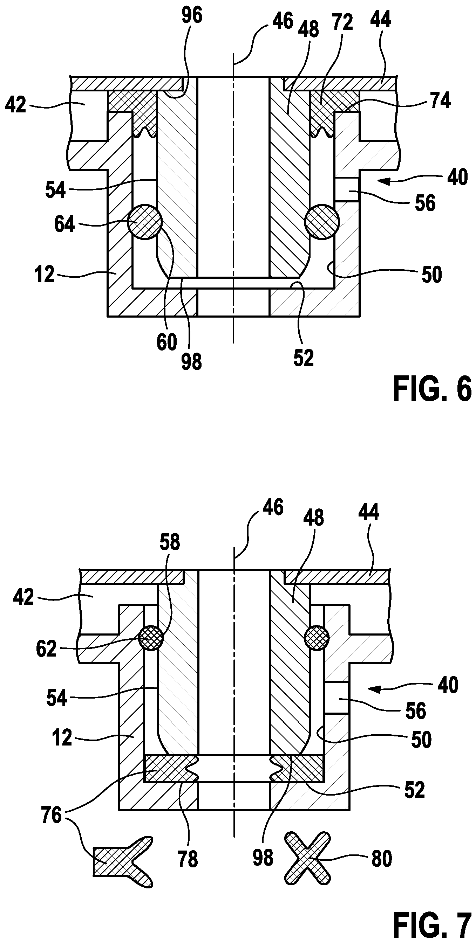

Figur 6 zeigt eine weitere Ausführungsvariante der erfindungsgemäß vorgeschlagenen Dichtungsanordnung 40. Gemäß dieser Ausführungsvariante ist das weitere Dichtelement 64 als V-förmige Dichtscheibe 72 beschaffen. Während das weitere Dichtelement 64 - hier ausgebildet als O-Ring 86 - in der zweiten Ausnehmung 60 an der Mantelfläche 54 des rohrförmigen Einsatzes 48 aufgenommen ist, ist das weitere Dichtelement 64 in Gestalt der V-förmigen Dichtscheibe 72 mit einer Stirnfläche 74 der ersten Stirnseite 96 des rohrförmigen Einsatzes 48 zugeordnet. Aus der Darstellung gemäß Figur 6 ergibt sich, dass auch in dieser Ausführungsvariante die mindestens eine Überlauföffnung 56 in dem Bereich liegt, der zwischen dem ersten Dichtelement 62 in Gestalt der V-förmigen Dichtscheibe 72 sowie dem als O-Ring 86 ausgebildeten weiteren Dichtelement 64 liegt. Auch in der Ausführungsvariante der erfindungsgemäß vorgeschlagenen Dichtungsanordnung 40 gemäß Figur 6 können mehrere Überlauföffnungen 56 in der Wandung, welche die Vertiefung 52 begrenzt, ausgebildet sein.

Bei Versagen des weiteren Dichtelements 64 in Gestalt des O-Rings 86 drückt das im Spalt zwischen der Mantelfläche 54 des rohrförmigen Einsatzes 48 und der Innenmantelfläche 50 strömende Kühlmedium die V-förmige Dichtscheibe 72 auseinander. Demzufolge wird das Material des weiteren Dichtelements 64 in Gestalt der V-förmigen Dichtscheibe 72 an das Material der Innenmantelfläche 50 der Vertiefung 52 einerseits und an die Mantelfläche 54 des rohrförmigen Einsatzes 48 andererseits gedrückt, so dass bei steigendem Druck die Dichtwirkung verbessert wird. Demzufolge bleibt nach wie vor der Hohlraum 42 der Leistungselektronik 24 samt der darin aufgenommenen Halbleiterbauelemente dicht gegenüber nachströmendem Kühlmedium.

In der Ausführungsvariante der erfindungsgemäß vorgeschlagenen Dichtungsanordnung 40 gemäß Figur 7 ist das erste Dichtelement 62 als O-Ring 86 ausgeführt. Das erste Dichtelement 62 ist in die erste Ausnehmung 58 an der Mantelfläche 54 des rohrförmigen Einsatzes 48 eingelassen. Der rohrförmige Einsatz 48 ist auch in der Ausführungsvariante gemäß Figur 7 symmetrisch zu seiner Symmetrieachse 46 ausgeführt.

In der Ausführungsvariante gemäß Figur 7 ist das weitere Dichtelement 64 als V-förmige Dichtscheibe 76 ausgeführt. Diese liegt auf einer Planfläche 78 am Boden der beispielsweise topfförmig ausgebildeten Vertiefung 52 des Gehäuses 12 auf. Das weitere Dichtelement 64 in Gestalt der V-förmigen Dichtscheibe 76 liegt zwischen der zweiten Stirnseite 98 des rohrförmigen Einsatzes 48 und der Planfläche 78 am Boden der beispielsweise topfförmig ausgebildeten Vertiefung 52. Auch in der Ausführungsvariante gemäß Figur 7 befindet sich die Überlauföffnung 56 im Bereich, der zwischen dem als O-Ring 86 ausgebildeten ersten Dichtelement 62 einerseits und dem weiteren Dichtelement 64 andererseits liegt, welches in diesem Fall als V-förmige Dichtscheibe 76 ausgeführt ist. Steigt bei der Ausführungsvariante gemäß Figur 7 an der Dichtungsanordnung 40 der Druck des Kühlmediums an, so wird die als weiteres Dichtelement 64 eingesetzte V-förmige Dichtscheibe 76 aufgrund ihrer V-förmigen Geometrie an der Innenseite gegen die zweite Stirnseite 98 des rohrförmigen Einsatzes 48 einerseits und andererseits an die Planfläche 78 am Boden der Vertiefung 52 angedrückt. Versagt das weitere Dichtelement 64 hingegen, bleibt der Hohlraum 42 der Leistungselektronik 24 mit seinen flüssigkeitsempfindlichen Bauelementen über das als O-Ring 86 ausgebildete erste Dichtelement 62 in seinem abgedichteten Zustand, d. h. das Kühlmedium kann über die Überlauföffnung 56 in der Wandung der Vertiefung 52 des Gehäuses 12 abgeführt werden.

Alternativ zur V-förmigen Dichtscheibe 76 gemäß der Darstellung in Figur 7 kann das weitere Dichtelement 64 auch als X-Ring 80 ausgeführt werden. Auch dieser ist aufgrund seiner Verformbarkeit, bedingt durch seine Geometrie, dazu geeignet, bei steigendem Druck des Kühlmediums im Kühlkreislauf höhere Dichtkräfte zu erzeugen, da aufgrund seiner Geometrie Bereiche des X-Rings 80 entweder an die Planfläche 78 am Boden der Vertiefung 52 einerseits und andererseits an die zweite Stirnseite 98 des rohrförmigen Einsatzes 48 angedrückt werden und sich eine erhöhte Dichtwirkung erreichen lässt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. E-Achsen-Modul (10), umfassend mindestens eine elektrische Maschine (14) und mindestens eine Leistungselektronik (24) und einen Kühlkreis mit einer Dichtungsanordnung (40) darin, wobei die Dichtungsanordnung (40) einen rohrförmigen Einsatz (48) umfasst, an dem ein erstes Dichtelement (62, 72) angeordnet ist, wobei ein weiteres Dichtelement (64, 76, 80) einer der Stirnseiten (96, 98) des rohrförmigen Einsatzes zugeordnet ist, wobei zwischen den Dichtelementen (62, 72; 64, 76, 80) eine Überlauföffnung (56) vorgesehen ist, wobei der rohrförmige Einsatz (48) in einer Vertiefung (52) eines Gehäuses (12) der elektrischen Maschine (14) aufgenommen ist und die Überlauföffnung (56) in einer Wandung der Vertiefung (52) des Gehäuses (12) ausgeführt ist.

2. E-Achsen-Modul gemäß Anspruch 1, **dadurch gekennzeichnet, dass** der rohrförmige Einsatz (48) in einer Konizität (66) ausgeführt ist, die zu einer Konizität (68) der Vertiefung (52) im Gehäuse (12) korrespondiert.

3. Dichtungsanordnung (40) gemäß den Ansprüchen 1 bis 2, **dadurch gekennzeichnet, dass** das erste Dichtelement (62) als O-Ring (86) ausgeführt ist und auf einer Mantelfläche (54) des rohrförmigen Einsatzes (48) sitzt.

4. Dichtungsanordnung (40) gemäß den Ansprüchen 1 bis 2, **dadurch gekennzeichnet, dass** das erste Dichtelement (62) als V-förmige Dichtscheibe (72) ausgeführt ist und an einer der Stirnseiten (96, 98) des rohrförmigen Einsatzes (48) sitzt.

5. Dichtungsanordnung (40) gemäß den Ansprüchen 1 bis 2, **dadurch gekennzeichnet, dass** das weitere Dichtelement (64) als O-Ring (86) ausgeführt ist und auf einer Mantelfläche (54) des rohrförmigen Einsatzes (48) sitzt.

6. Dichtungsanordnung (40) gemäß den Ansprüchen 1 bis 2, **dadurch gekennzeichnet, dass** das weitere Dichtelement (64) als V-förmige Dichtscheibe (72) oder als X-Ring (80) ausgeführt ist und einer der Stirnseiten (96, 98) des rohrförmigen Einsatzes (48) zugeordnet ist.

7. Dichtungsanordnung (40) gemäß den Ansprüchen 1 bis 2, **dadurch gekennzeichnet, dass** das erste Dichtelement (62) und das weitere Dichtelement (64), die als O-Ring (86) ausgeführt sind, in einem vertikalen Abstand (70) zueinander am rohrförmigen Einsatz (48) angeordnet sind.

8. Dichtungsanordnung (40) gemäß den Ansprüchen 1 bis 7, **dadurch gekennzeichnet, dass** über das erste Dichtelement (62, 72) ein Hohlraum (42) der Leistungselektronik (24) gegen das durch das Gehäuse (12) nachströmende Kühlmedium abgedichtet ist.

## Claims

1. E-axle module (10), comprising at least one electric machine (14) and at least one power electronics system (24) and a cooling circuit having a seal assembly (40) therein, wherein the seal assembly (40) comprises a tubular insert (48) on which a first sealing element (62, 72) is arranged, wherein a further sealing element (64, 76, 80) is assigned to one of the end faces (96, 98) of the tubular insert, wherein an overflow opening (56) is provided between the sealing elements (62, 72; 64, 76, 80), wherein the tubular insert (48) is received in a recess (52) of a housing (12) of the electric machine (14) and the overflow opening (56) is made in a wall of the recess (52) of the housing (12).

2. E-axle module according to Claim 1, **characterized in that** the tubular insert (48) is designed with a conicity (66) that corresponds to a conicity (68) of the recess (52) in the housing (12).

3. Seal assembly (40) according to Claims 1 and 2, **characterized in that** the first sealing element (62) is designed as an O-ring (86) and sits on a lateral surface (54) of the tubular insert (48).

4. Seal assembly (40) according to Claims 1 and 2, **characterized in that** the first sealing element (62) is designed as a V-shaped sealing washer (72) and sits on one of the end faces (96, 98) of the tubular insert (48).

5. Seal assembly (40) according to Claims 1 and 2, **characterized in that** the further sealing element (64) is designed as an O-ring (86) and sits on a lateral surface (54) of the tubular insert (48).

6. Seal assembly (40) according to Claims 1 and 2, **characterized in that** the further sealing element (64) is designed as a V-shaped sealing washer (72) or as an X-ring (80) and is assigned to one of the end faces (96, 98) of the tubular insert (48).

7. Seal assembly (40) according to Claims 1 and 2, **characterized in that** the first sealing element (62) and the further sealing element (64), which are designed as an O-ring (86), are arranged at a vertical distance (70) from each other on the tubular insert (48).

8. Seal assembly (40) according to Claims 1 to 7, **characterized in that** a cavity (42) of the power electronics system (24) is sealed off by means of the first sealing element (62, 72) against the cooling medium still flowing through the housing (12).

## Revendications

1. Module (10) d'entraînement électrique d'essieu, comprenant au moins une machine électrique (14) et au moins une électronique de puissance (24) et un circuit de refroidissement avec un agencement d'étanchéité (40) à l'intérieur, l'agencement d'étanchéité (40) comprenant un insert tubulaire (48) sur lequel est agencé un premier élément d'étanchéité (62, 72), un autre élément d'étanchéité (64, 76, 80) étant associé à l'une des faces frontales (96, 98) de l'insert tubulaire, une ouverture de trop-plein (56) étant prévue entre les éléments d'étanchéité (62, 72 ; 64, 76, 80), l'insert tubulaire (48) étant logé dans un évidement (52) d'un boîtier (12) de la machine électrique (14) et l'ouverture de trop-plein (56) étant réalisée dans une paroi de l'évidement (52) du boîtier (12).

2. Module d'entraînement électrique d'essieu selon la revendication 1, **caractérisé en ce que** l'insert tubulaire (48) est réalisé avec une conicité (66) qui correspond à une conicité (68) de l'évidement (52) dans le boîtier (12).

3. Agencement d'étanchéité (40) selon les revendications 1 à 2, **caractérisé en ce que** le premier élément d'étanchéité (62) est réalisé sous la forme d'un joint torique (86) et est placé sur une surface d'enveloppe (54) de l'insert tubulaire (48).

4. Agencement d'étanchéité (40) selon les revendications 1 à 2, **caractérisé en ce que** ledit premier élément d'étanchéité (62) est réalisé sous la forme d'un joint d'étanchéité en forme de V (72) et est placé sur l'une des faces frontales (96, 98) de l'insert tubulaire (48).

5. Agencement d'étanchéité (40) selon les revendications 1 à 2, **caractérisé en ce que** l'autre élément d'étanchéité (64) est réalisé sous la forme d'un joint torique (86) et est placé sur une surface d'enveloppe (54) de l'insert tubulaire (48).

6. Agencement d'étanchéité (40) selon les revendications 1 à 2, **caractérisé en ce que** l'autre élément d'étanchéité (64) est réalisé sous la forme d'un disque d'étanchéité en forme de V (72) ou d'un anneau en X (80) et est associé à l'une des faces frontales (96, 98) de l'insert tubulaire (48).

7. Agencement d'étanchéité (40) selon les revendications 1 à 2, **caractérisé en ce que** le premier élément d'étanchéité (62) et l'autre élément d'étanchéité (64), qui sont conçus sous la forme de joints toriques (86), sont agencés à une distance verticale (70) l'un de l'autre sur l'insert tubulaire (48).

8. Agencement d'étanchéité (40) selon les revendications 1 à 7, **caractérisé en ce qu'**une cavité (42) de l'électronique de puissance (24) est rendue étanche par rapport au fluide de refroidissement s'écoulant à travers le boîtier (12) par l'intermédiaire du premier élément d'étanchéité (62, 72).
